# EUROPEAN PATENT SPECIFICATION

(11) **EP 4 513 905 B1**
(45) Date of publication and mention of the grant of the patent: **07.10.2026**
(21) Application number: 23818752.0
(22) Date of filing: 17.02.2023
(51) Int. Cl.: H04W 4/021, G08B 21/02

(54) **ELECTRONIC FENCE SETTING METHOD AND APPARATUS, AND COMPUTER-READABLE STORAGE MEDIUM**
VERFAHREN UND VORRICHTUNG ZUR EINSTELLUNG EINES ELEKTRONISCHEN ZAUNS UND COMPUTERLESBARES SPEICHERMEDIUM
PROCÉDÉ ET APPAREIL DE RÉGLAGE DE CLÔTURE ÉLECTRONIQUE, ET SUPPORT DE STOCKAGE LISIBLE PAR ORDINATEUR

(30) Priority: 07.06.2022 CN 202210633247
(43) Date of publication of application: 26.02.2025
(73) Proprietor: ZTE Corporation, Shenzhen, Guangdong 518057 (CN)
(72) Inventor: REN, Zhongjie, Shenzhen, Guangdong 518057 (CN)
(74) Representative: Carangelo, Pierluigi
(86) International application number: PCT/CN2023/076855
(87) International publication number: WO 2023/236584

(56) References cited:
- WO-A1-2017/126841
- CN-A- 106 375 956
- CN-A- 109 511 089
- CN-A- 110 599 740
- CN-A- 110 753 302
- CN-A- 110 933 602
- US-A1- 2020 196 107
- US-A1- 2022 114 873

## Description

### TECHNICAL FIELD

Embodiments of the present disclosure relate to, but are not limited to, the field of geofencing technologies, and particularly, to a geofence setting method and apparatus, and a computer-readable storage medium.

### BACKGROUND

Currently, due to the busy work schedules of parents, a considerable number of elementary school students need to commute to and from school on their own, and many parents have given their children a wearable tracking device (hereinafter referred to as a "tracker") to track the location and movement trajectory of their children.

In related technologies, the geofence setting and usage of such tracker products are too rigid, unable to accurately match the actual usage scenarios, which greatly discounts the effectiveness of the geofence, and is unable to provide good protection for the students, resulting in a poor user experience.

US2020/196107A1 discloses that an exemplary virtual boundary system accesses a positioning signal generated by a positioning system. A geolocation for a real-time tracking device is derivable from the positioning signal within a first margin of error. The virtual boundary system also accesses a correction signal generated by a positioning enhancement system and corresponding to the positioning signal generated by the positioning system. Based on the positioning signal and the correction signal, the virtual boundary system determines a refined geolocation of the real-time tracking device relative to a user-specified geographic boundary. The refined geolocation is accurate within a second margin of error that is less than the first margin of error. Corresponding methods and systems are also disclosed.

US2022/114873A1 discloses that a geofencing system comprises at least one physical, moveable marker, the or each marker being arranged to define at least part of a geofence based on the position of the moveable marker such that changing the position of the or each moveable marker changes the geofence. The or each marker is arranged to provide a visible and/or audible indication of geofence. The system also comprises at least one wearable device arranged to receive data concerning the position of the geofence. The wearable device is arranged to store up-to-date geofence information and to provide an alert in response to the wearable device crossing the geofence.

### SUMMARY

The invention is set out in the appended set of claims.

The following is a summary of the subject matters described in detail herein. This summary is not intended to limit the scope of protection of the claims.

Embodiments of the present disclosure provide a geofence setting method and apparatus, and a computer-readable storage medium.

In accordance with a first aspect of the present disclosure, an embodiment provides a geofence setting method according to claim 1.

In accordance with another aspect of the present disclosure, an embodiment provides an electronic device according to claim 9.

In accordance with another aspect of the present disclosure, an embodiment provides a computer-readable storage medium, storing a computer-executable program configured to cause a computer to execute the geofence setting method as described in the first aspect above.

Additional features and advantages of the present disclosure will be set forth in the subsequent description, and in part will become apparent from the description, or may be learned by practice of the present disclosure. The purposes and other advantages of the present disclosure can be realized and obtained by structures particularly noted in the description, the claims and the accompanying drawings.

### BRIEF DESCRIPTION OF DRAWINGS

The accompanying drawings are used to provide further understanding of the technical schemes of the present disclosure and constitute a part of the description. The accompanying drawings are used to explain the technical schemes of the present disclosure together with the embodiments of the present disclosure, and do not constitute a restriction on the technical schemes of the present disclosure.
FIG. 1 is a main flowchart of a geofence setting method according to an embodiment of the present disclosure;
FIG. 2A is a sub-flowchart of a geofence setting method according to an embodiment of the present disclosure;
FIG. 2B is another sub-flowchart of a geofence setting method according to an embodiment of the present disclosure;
FIG. 3 is another sub-flowchart of a geofence setting method according to an embodiment of the present disclosure;
FIG. 4 is another sub-flowchart of a geofence setting method according to an embodiment of the present disclosure;
FIG. 5 is a schematic diagram illustrating a scenario where a danger buffer area (DBA) is configured to be activated while a safety buffer area (SBA) is configured to be deactivated when a GT (parent) is located outside the SBA during a school dismissal time period;
FIG. 6 is a schematic diagram illustrating a scenario where a DBA is configured to be deactivated while an SBA is configured to be activated when a GT (parent) is located inside the SBA during a school dismissal time period;
FIG. 7 is a schematic diagram illustrating a scenario where both a DBA and an SBA are configured to be deactivated when a distance between a GT and an UGT is less than a safety threshold;
FIG. 8 is a schematic diagram illustrating a scenario where a DBA is configured to be deactivated while an SBA is configured to be activated when a GT1 (parent) is located inside the SBA during a school time period;
FIG. 9 is a schematic diagram illustrating a scenario where a DBA is configured to be activated while an SBA is configured to be deactivated when a GT1 (parent) is located outside the SBA and a distance between a GT2 (teacher) and a UGT is greater than a safety threshold during a school time period;
FIG. 10 is a schematic diagram illustrating a scenario where both DBA and SBA are configured to be deactivated when a distance between a GT2 (teacher) and an UGT is less than a safety threshold during a school time period;
FIG. 11 is a structural schematic diagram of a geofence setting apparatus according to an embodiment of the present disclosure; and
FIG. 12 is a structural schematic diagram of an electronic device according to an embodiment of the present disclosure.

### DETAILED DESCRIPTION

In order to make the objectives, technical schemes and advantages of the present disclosure more apparent, the present disclosure is further described in detail in conjunction with the accompanying drawings and embodiments. It should be understood that the embodiments described herein are only intended to explain the present disclosure, and are not intended to limit the present disclosure.

It should be known that, in the description of the embodiments of the present disclosure, "plurality (or multiple)" means two or more; "greater than", "less than", "over", etc. are to be understood to exclude the given figure; and "above", "below", "within", etc. are understood to include the given figure. If there are descriptions using "first", "second", etc., they are only for the purpose of distinguishing technical features, and should not be understood as indicating or implying relative importance or implying the number of the indicated technical features or implying the sequence of the indicated technical features.

In view of the problem that in some cases, the geofence setting and usage of such tracker products are too rigid and unable to accurately match the actual usage scenarios, embodiments of the present disclosure provide a geofence setting method and apparatus, and a computer-readable storage medium. The geofence setting method includes: determining an under guardian tracker that needs to be monitored by a guardian tracker; generating, by the guardian tracker, a geofence, and setting up a buffer area in a boundary area of the geofence; and configuring an activation condition or a deactivation condition for the geofence and the buffer area according to a usage scenario in which the geofence is applied, such that with the geofence and the buffer area being activated, the guardian tracker receives notification sent by the under guardian tracker in response to determining that the under guardian tracker has entered or left the buffer area. Based on this, users can freely set up geofences, allowing the users to set up buffer areas, and the buffer areas can be activated or deactivated based on the actual conditions set by the users. This allows the geofence setting and usage to better match usage scenarios for the users, thereby enhancing the user experience.

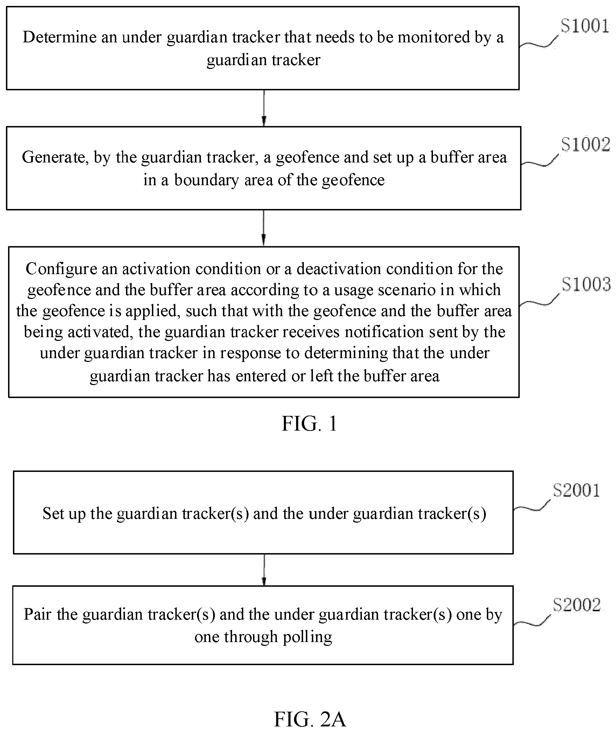

As shown in FIG. 1, FIG. 1 is a flowchart of a geofence setting method according to an embodiment of the present disclosure. The geofence setting method includes, but is not limited to, the following operations.

At S1001, an under guardian tracker that needs to be monitored by a guardian tracker is determined.

At S 1002, a geofence is generated by the guardian tracker, and a buffer area is set in a boundary area of the geofence.

At S 1003, an activation condition or a deactivation condition for the geofence and the buffer area is configured according to a usage scenario in which the geofence is applied, such that with the geofence and the buffer area being activated, the guardian tracker receives notification sent by the under guardian tracker in response to determining that the under guardian tracker has entered or left the buffer area.

In an implementation, before setting the geofence, a guardian tracker(s) (set as GT(s)) and an under guardian tracker(s) (set as UGT(s)) can be set up first. The guardian tracker may be a tracker device or a mobile phone installed with a tracker management application (APP), and the under guardian tracker may be a tracker device. The GT(s) and the UGT(s) may be in a one-to-one, one-to-many, or many-to-many relationship. For example, one or more GTs may be configured for one UGT, and one or more GTs may be configured for a plurality of UGTs.

In an implementation, there may be one buffer area or a plurality of buffer areas. For the example of setting up two buffer areas, the buffer areas can include a safety buffer area (SBA) and a danger buffer area (DBA). In this implementation, first, a geofence is set up for a UGT through the APP, and then a safety buffer area (set as SBA) and a danger buffer area (set as DBA) are set up in a boundary area of the geofence. The SBA is generally set outside the geofence, and the DBA is generally set inside the geofence. When the UGT is located in the SBA or DBA, specific notifications will be sent to the guardian tracker. The guardian can check the real-time location of the tracker wearer through the mobile APP, and the cloud sends notification to the guardian tracker in a timely manner. The implementation method may be a short message or to push the notification to the APP installed on the guardian tracker.

In an implementation, three ways of configuring the activation condition or the deactivation condition for the buffer area may be provided. First, the condition may be configured based on time, that is, the buffer area may be activated or deactivated according to specific time periods; second, the condition may be configured based on an absolute location of the GT or UGT, that is, the buffer area may be activated or deactivated when GT or UGT reaches or leaves a specific area; and third, the condition may be configured based on a relative location of the GT and UGT, that is, whether the buffer area is to be activated or deactivated is determined according to the distance between the GT and UGT.

In an implementation, when setting the geofence, the user can set up a buffer area in the boundary area of the geofence, and the buffer area may be activated and deactivated by a specific method. With the buffer area being activated, if the monitored tracker device is in the buffer area, specific notifications will be sent to the guardian.

In an implementation, a positioning mode for the under guardian tracker is switched from periodic positioning to real-time positioning in response to determining that the under guardian tracker is in the buffer area, so that the guardian can monitor the location of the ward in real time.

In an implementation, when the usage scenario is a school, taking students going to school as an example, parents usually will set the school area as a geofence, and by setting up the SBA and DBA, it can better fit the actual usage scenario. In this implementation, the GT and UGT are first set up through a specific APP, and then a geofence is set up for the UGT. The geofence can be set up by selecting a location, manually drawing the boundary, or using a closed-loop route traced by the GT's movement. To set the SBA and DBA for the geofence, the buffer areas are set in a geofence boundary area. Generally, the SBA is set outside the geofence boundary, and the DBA is set inside the geofence boundary. Activation and deactivation conditions are configured for the geofence, SBA and DBA. For example, when a student goes to school, the school area is set as the geofence, an area inside the school gate is set as the DBA, and an area outside the school gate is set as the SBA. If the activation is based on time, that is, if the buffer area or geofence is configured to take effect within a fixed time period, the DBA may be configured to be activated during the school time period and the SBA may be configured to be activated during the school dismissal time period. If the activation is based on the absolute location of GT or UGT, that is, if the buffer area or geofence is configured to take effect when the GT is in a certain area, it can be configured that when the geographical location of the GT is in the SBA area, the SBA is activated and the DBA is deactivated, and when the geographical location of the GT is outside the SBA area, the SBA is deactivated and the DBA is activated. If the activation is based on the relative location of GT and UGT, that is, if the buffer area or the geofence takes effect when the distance between the GT and UGT is greater than a safety threshold, the geofence, SBA or DBA can be configured to be deactivated when the distance between GT and UGT is less than the safety threshold; and when the distance between the GT and UGT is greater than the safety threshold, the geofence or SBA or DBA is activated. Users can configure different activation and deactivation conditions individually or in combination according to their own needs. When the UGT enters or leaves the buffer area, specific alarm or notification information will be pushed to the GT. When the UGT enters the DBA, if the UGT was previously positioned periodically, its positioning mode will be switched to real-time positioning.

In an implementation, when the UGT(s) and the GT(s) are in a one-to-many or many-to-many relationship, multiple conditions may be set to activate or deactivate the buffer area(s). For example, if the student is a UGT, and its corresponding two GTs are parent GT1 and teacher GT2, DBA may be configured to be activated when GT1 is located within the SBA and GT2 is located outside the DBA, etc.

In an implementation, the trackers can communicate with the cloud through their own wireless communication modules, so that the trackers can receive instructions from the cloud and send their own relevant information to the cloud. Through the APP of a tracker system, the relevant information of the trackers in relevant accounts can be obtained from the cloud and the control can be performed accordingly.

As shown in FIG. 2A, step S1001 may include, but is not limited to, the following substeps.

At S2001, the guardian tracker(s) and the under guardian tracker(s) are set up.

At S2002, the guardian tracker(s) and the under guardian tracker(s) are paired one by one through polling.

In an implementation, before setting the geofence, a guardian tracker(s) (set as GT(s)) and an under guardian tracker(s) (set as UGT(s)) need to be set up first. The guardian tracker may be a tracker device or a mobile phone installed with a tracker management APP, and the under guardian tracker may be a tracker device. The GT(s) and the UGT(s) may be in a one-to-one, one-to-many, or many-to-many relationship. For example, one or more GTs may be configured for one UGT, and one or more GTs may be configured for a plurality of UGTs.

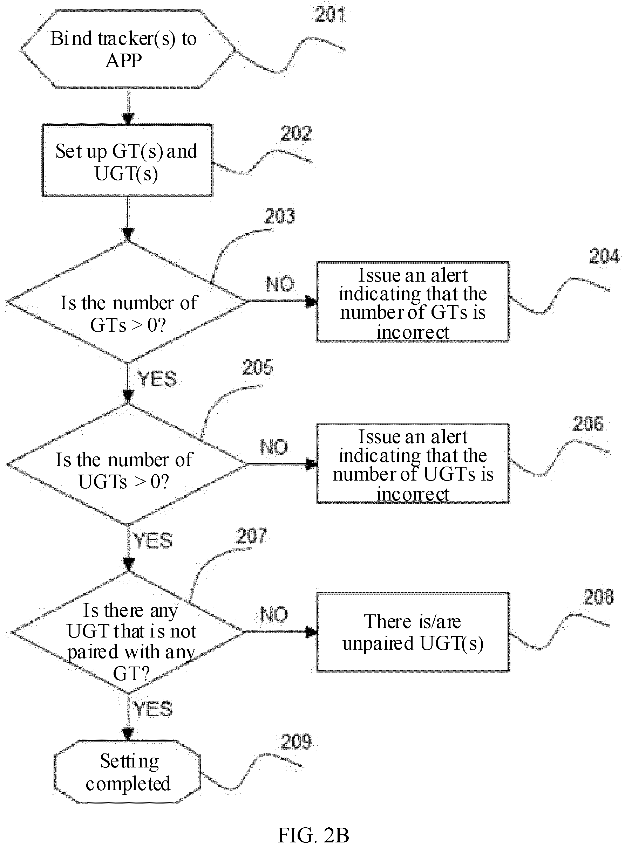

In an implementation, as shown in FIG. 2B, the setting may include the following steps.

At step 201, the tracker(s) needing to be associated is/are bound to the APP.

At step 202, roles of the trackers are set, where UGT can only be assigned to a tracker, and GT can be assigned to a tracker or a mobile phone bound to the APP.

At step 203, it is determined whether the number of GTs that have been set up is greater than 0.

At step 204, in response to the number of GTs being equal to 0, an alert is issued to the user that the number of GTs is incorrect and a reset is required.

At step 205, it is determined whether the number of UGTs that have been set up is greater than 0.

At step 206, in response to the number of UGTs being equal to 0, an alert is issued to the user that the number of UGTs is incorrect and a reset is required.

At step 207, polling is performed to determine whether all UGT(s) have a paired GT.

At step 208, if there is any GT that is not paired, the user is notified of the unpaired GT(s).

At step 209, the setting is completed.

In an implementation, generating the geofence by the guardian tracker may include the following three approaches: the first approach is to acquire, at the guardian tracker, the geofence selected by a guardian; the second approach is to acquire, at the guardian tracker, the geofence drawn by a guardian; and the third approach is to generate the geofence from a movement trajectory of the guardian tracker. The buffer area may include a safety buffer area and a danger buffer area. When the buffer areas are set in a boundary area of the geofence, the safety buffer area is set outside the geofence, and the danger buffer area is set inside the geofence, where the safety buffer area and the danger buffer area are smaller than the geofence.

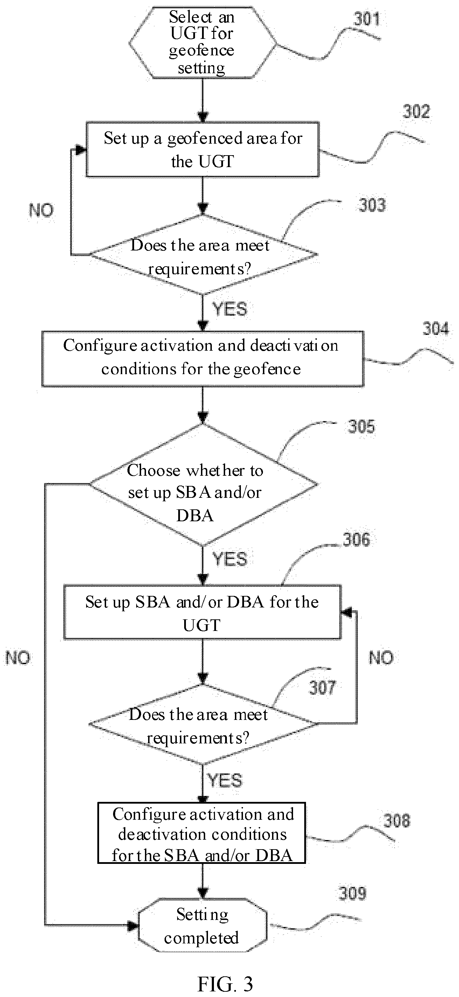

In an implementation, as shown in FIG. 3, setting up the geofence, the safety buffer area (SBA), and the danger buffer area (DBA) may include the following steps.

At step 301, a UGT is selected from the trackers bound to the APP for geofence setting.

At step 302, a geofence can be set by selecting a location, manually drawing the boundary, or using a closed-loop route traced by the GT's movement.

At step 303, it is determined whether the geofenced area meets the requirements, mainly by determining whether the size of the geofenced area is within a range defined by a minimum threshold and a maximum threshold.

At step 304, activation and deactivation conditions for the geofence are configured. The activation and deactivation conditions for the geofence may be configured based on time, an absolute location of GT or UGT, and a relative location of GT and UGT, where a single condition may be configured or compound conditions may be configured.

At step 305, the user chooses whether to set up the buffer area(s) or not.

At step 306, if the buffer area(s) is/are to be set up, the buffer area(s) can be set up according to the geofence, where the SBA is set outside the geofence close to the boundary of the geofence, and the DBA is set inside the geofence.

At step 307, it is determined whether the buffer area meets the requirements, mainly by determining whether the size of the buffer area is within a range defined by a minimum threshold and a maximum threshold, where for the SBA, it is also necessary to determine whether the area is outside the geofence and close to the edge of the geofence, and for the DBA, it is also necessary to determine whether the area is within the geofence.

At step 308, activation and deactivation conditions for the buffer area(s) are configured. The activation and deactivation conditions for the geofence may be configured based on time, an absolute location of GT or UGT, and a relative location of GT and UGT, where a single condition may be configured or compound conditions may be configured.

At step 309, the setting is completed.

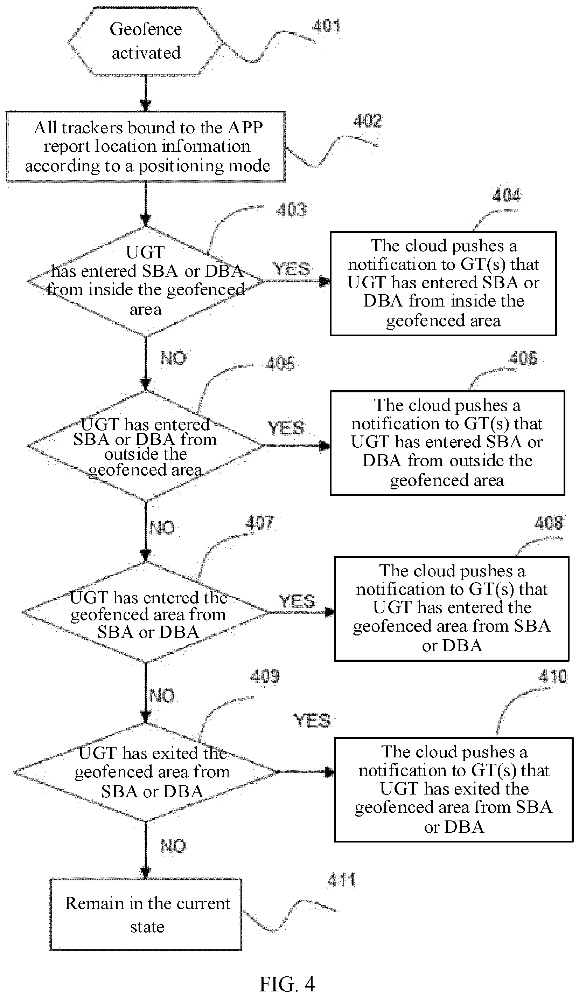

In an implementation, as shown in FIG. 4, the operation for the safety buffer area and the danger buffer area may include the following steps.

At step 401, the geofence is in an activated state.

At step 402, all trackers bound to the APP report location information according to a set positioning mode (generally, the positioning modes of tracker products include a periodic positioning mode and a real-time positioning mode).

At step 403, it is determined whether the UGT has entered a buffer area from inside the geofence according to the location information of the UGT.

At step 404, if the UGT has entered the SBA from inside the geofence, a corresponding notification is pushed to the GT; and if the UGT has entered the DBA from inside the geofence, the environment in which the UGT is located is dangerous, and in addition to pushing a corresponding alarm information to the GT, the UGT positioning mode is switched to a real-time positioning mode.

At step 405, it is determined whether the UGT has entered a buffer area from outside the geofence according to the location information of the UGT.

At step 406, if the UGT has entered the SBA from outside the geofence, a corresponding notification is pushed to the GT; and if the UGT has entered the DBA from outside the geofence, the environment in which the UGT is located is dangerous, and in addition to pushing a corresponding alarm information to the GT, the UGT positioning mode is switched to a real-time positioning mode.

At step 407, it is determined whether the UGT has entered the geofence from a buffer area according to the location information of the UGT.

At step 408, if the UGT has entered the geofence from a buffer area, a corresponding notification is pushed to the GT, and the positioning mode can be switched to a periodic positioning mode.

At step 409, it is determined whether the UGT has exited the geofence from a buffer area according to the location information of the UGT.

At step 410, if the UGT has exited the geofence from a buffer area, the environment in which the UGT is located is dangerous, and in addition to pushing a corresponding alarm information to the GT, the UGT positioning mode is switched to a real-time positioning mode.

At step 411, the UGT remains in the current state.

Hereinafter, the geofence setting method provided by the present disclosure will be further described with reference to the drawings and embodiments.

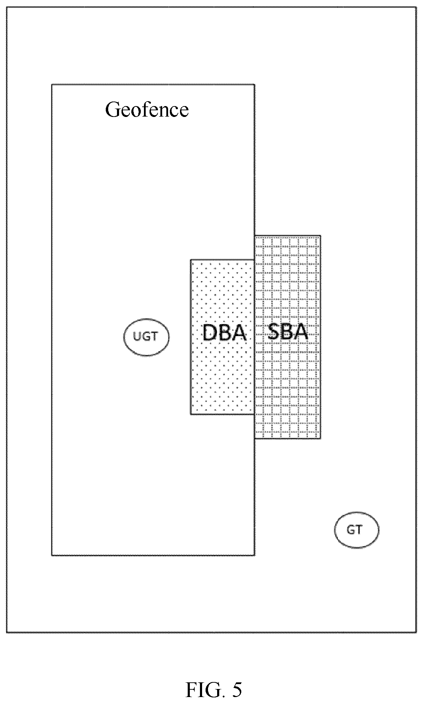

The setting and use of the geofence and buffer area can be carried out through an APP interface. The schematic diagram of the APP interface for activating or deactivating the buffer areas according to the location of the tracker(s) is shown in FIGS. 5 to 10.

FIG. 5 is a schematic diagram illustrating a scenario where a DBA is configured to be activated while an SBA is configured to be deactivated when a GT (parent) is located outside the SBA during a school dismissal time period. If the UGT has entered the DBA from inside the geofence, the environment in which the UGT is located is dangerous, and in addition to pushing a corresponding alarm information to the GT, the UGT positioning mode is switched to a real-time positioning mode.

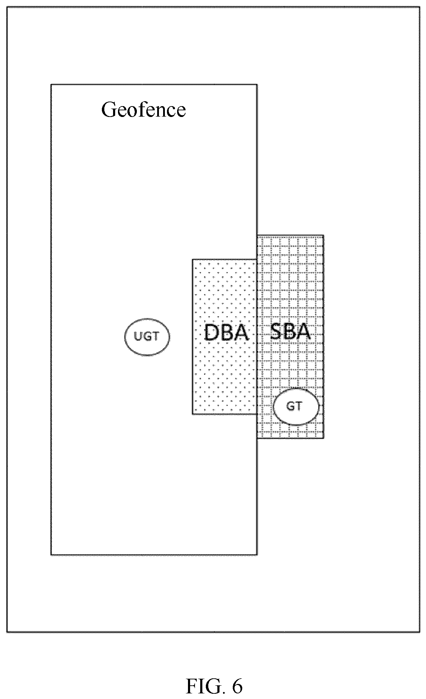

FIG. 6 is a schematic diagram illustrating a scenario where a DBA is configured to be deactivated while an SBA is configured to be activated when a GT (parent) is located inside the SBA during a school dismissal time period. If the UGT has entered the SBA from inside the geofence, a corresponding notification is pushed to the GT.

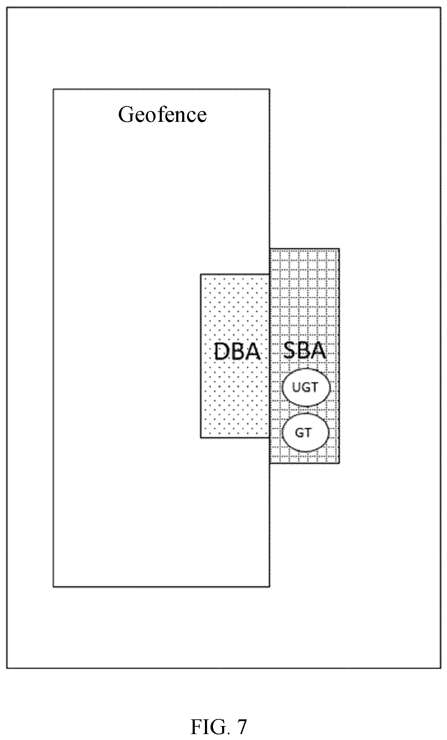

FIG. 7 is a schematic diagram illustrating a scenario where both a DBA and an SBA are configured to be deactivated when a distance between a GT and an UGT is less than a safety threshold, indicating that the environment where the UGT is located is safe.

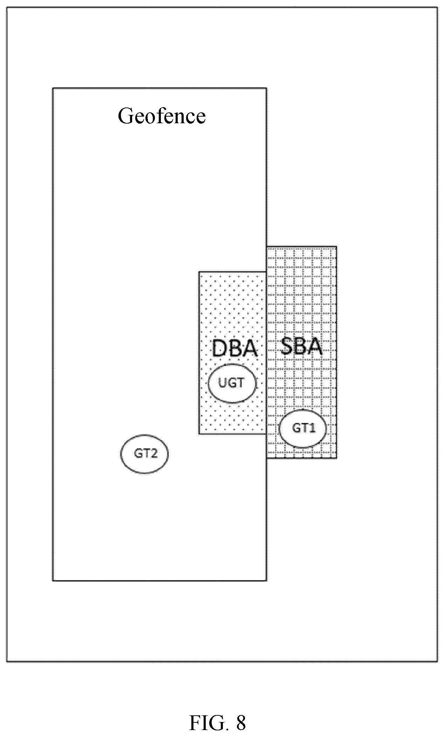

FIG. 8 is a schematic diagram illustrating a scenario where a DBA is configured to be deactivated while an SBA is configured to be activated when a GT1 (parent) is located inside the SBA during a school time period. If the UGT has entered the geofence from a buffer area, a corresponding notification is pushed to the GT, and the UGT positioning mode can be switched to a periodic positioning mode.

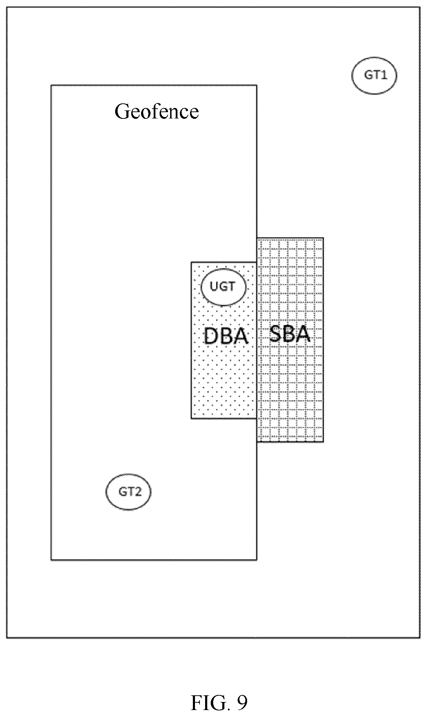

FIG. 9 is a schematic diagram illustrating a scenario where a DBA is configured to be activated while an SBA is configured to be deactivated when a GT1 (parent) is located outside the SBA and a distance between a GT2 (teacher) and a UGT is greater than a safety threshold during a school time period. If the UGT has exited the geofence from a buffer area, the environment in which the UGT is located is dangerous, and in addition to pushing a corresponding alarm information to the GT, the UGT positioning mode is switched to a real-time positioning mode.

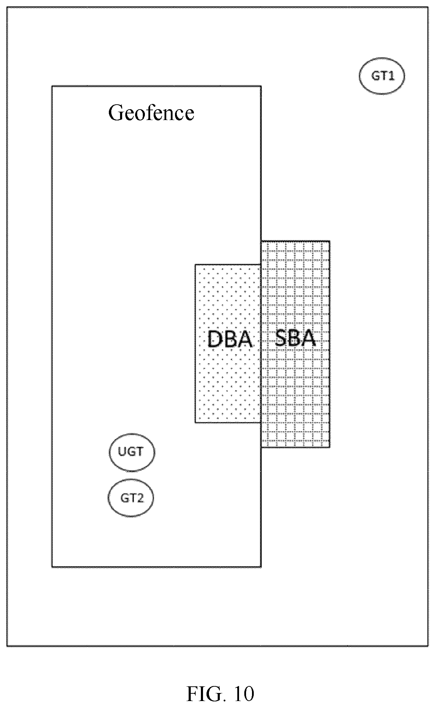

FIG. 10 is a schematic diagram illustrating a scenario where both DBA and SBA are configured to be deactivated when a distance between a GT2 (teacher) and an UGT is less than a safety threshold during a school time period, indicating that the environment where the UGT is located is safe.

It should be noted that all the three kinds of conditions, i.e. the time period, the absolute location of GT or UGT, and the relative location of GT and UGT, can be set in a compound manner, and if there is a one-to-many or many-to-many relationship between the GT(s) and the UGT(s), the conditions of the absolute location and the relative location can be configured using the locations of the plurality of trackers together.

To sum up, the present disclosure can be applied to all scenarios in which a geofence is to be set up. The present disclosure greatly improves the practicality of existing geofences by proposing the use of buffer areas in conjunction with geofences and expanding the selection of conditions for activating and deactivating the geofences and buffer areas. It should be noted that the present disclosure can be applied to various tracker related products.

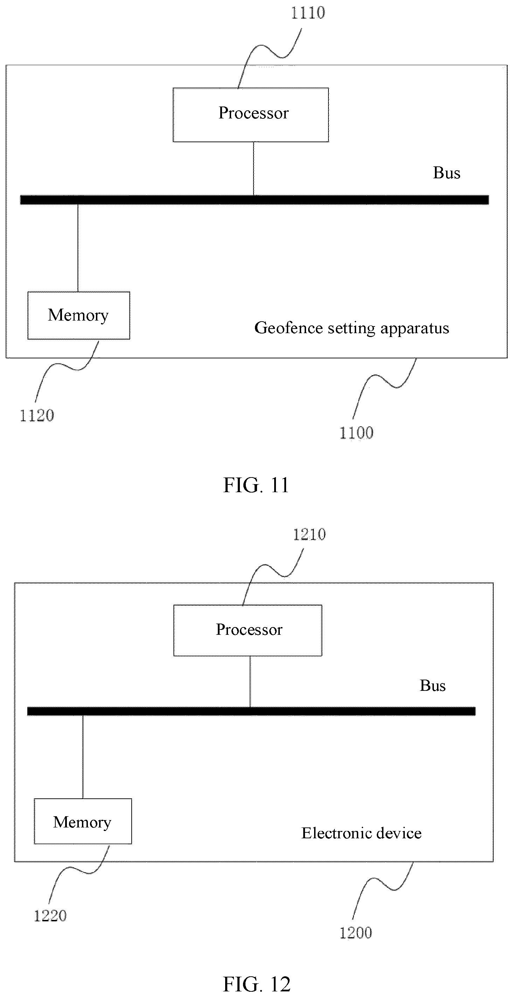

As shown in FIG. 11, a further embodiment of the present disclosure provides a geofence setting apparatus 1100.

In an implementation, the geofence setting apparatus 1100 may include: at least one processor 1110 and memory 1120. In FIG. 11, one processor 1110 and one memory 1120 are shown as an example. The processor 1110 and the memory 1120 may be connected by a bus or in other ways. In FIG. 11, the connection is realized by a bus for example.

As a non-transitory computer-readable storage medium, the memory 1120 may be configured to store a non-transitory software program and a non-transitory computer-executable program, for example, the geofence setting method in any of the above embodiments of the present disclosure. The processor 1110 implements the geofence setting method in any of the embodiments of the present disclosure by running the non-transitory software program and the program stored in the memory 1120.

The memory 1120 may include a program storage area and a data storage area, where the program storage area may store an operating system and application program(s) required by at least one feature, and the data storage area may store data and the like required for performing the geofence setting method in any of the above-described embodiments of the present disclosure. In addition, the memory 1120 may include a high-speed random access memory 1120 and also a non-transitory memory 1120, for example, at least one magnetic disk storage device, a flash memory device, or another non-transitory solid-state storage device. In some implementations, the memory 1120 may include memories 1120 remotely located with respect to the processor 1110, and these remote memories 1120 may be connected to geofence setting apparatus 1100 via a network. Examples of the above-mentioned network include, but are not limited to, the Internet, an intranet, a local area network, a mobile communications network, and a combination thereof.

The non-transitory software program and the program required to realize the geofence setting method in any of the embodiments of the present disclosure are stored in the memory 1120, and when executed by at least one processor 1110, cause the at least one processor to perform the geofence setting method in the embodiment of the present disclosure, for example, to execute the above-described method steps S1001 to S1003 in FIG. 1, S2001 to S2002 in FIG. 2A, 201 to 209 in FIG. 2B, 301 to 309 in FIG. 3, and 401 to 411 in FIG. 4. The geofence setting method includes: determining an under guardian tracker that needs to be monitored by a guardian tracker; generating, by the guardian tracker, a geofence, and setting up a buffer area in a boundary area of the geofence; and configuring an activation condition or a deactivation condition for the geofence and the buffer area according to a usage scenario in which the geofence is applied, such that with the geofence and the buffer area being activated, the guardian tracker receives notification sent by the under guardian tracker in response to determining that the under guardian tracker has entered or left the buffer area. Based on this, users can freely set up geofences, allowing the users to set up buffer areas, and the buffer areas can be activated or deactivated based on the actual conditions set by the users. This allows the geofence setting and usage to better match usage scenarios for the users, thereby enhancing the user experience.

As shown in FIG. 12, a further embodiment of the present disclosure provides an electronic device 1200.

In an implementation, the electronic device 1200 may include: at least one processor 1210 and memory 1220. In FIG. 12, one processor 1210 and one memory 1220 are shown as an example. The processor 1210 and the memory 1220 may be connected by a bus or in other ways. In FIG. 12, the connection is realized by a bus for example.

As a non-transitory computer-readable storage medium, the memory 1220 may be configured to store a non-transitory software program and a non-transitory computer-executable program, for example, the geofence setting method in any of the above embodiments of the present disclosure. The processor 1210 implements the geofence setting method in any of the embodiments of the present disclosure by running the non-transitory software program and the program stored in the memory 1220.

The memory 1220 may include a program storage area and a data storage area, where the program storage area may store an operating system and application program(s) required by at least one feature, and the data storage area may store data and the like required for performing the geofence setting method in any of the above-described embodiments of the present disclosure. In addition, the memory 1220 may include a high-speed random access memory 1220 and also a non-transitory memory 1220, for example, at least one magnetic disk storage device, a flash memory device, or another non-transitory solid-state storage device. In some implementations, the memory 1220 may include memories 1220 remotely located with respect to the processor 1210, and these remote memories 1220 may be connected to geofence setting apparatus via a network. Examples of the above-mentioned network include, but are not limited to, the Internet, an intranet, a local area network, a mobile communications network, and a combination thereof.

The non-transitory software program and the program required to realize the geofence setting method in any of the embodiments of the present disclosure are stored in the memory 1220, and when executed by at least one processor 1210, cause the at least one processor to perform the geofence setting method in the embodiment of the present disclosure, for example, to execute the above-described method steps S1001 to S1003 in FIG. 1, S2001 to S2002 in FIG. 2A, 201 to 209 in FIG. 2B, 301 to 309 in FIG. 3, and 401 to 411 in FIG. 4. The geofence setting method includes: determining an under guardian tracker that needs to be monitored by a guardian tracker; generating, by the guardian tracker, a geofence, and setting up a buffer area in a boundary area of the geofence; and configuring an activation condition or a deactivation condition for the geofence and the buffer area according to a usage scenario in which the geofence is applied, such that with the geofence and the buffer area being activated, the guardian tracker receives notification sent by the under guardian tracker in response to determining that the under guardian tracker has entered or left the buffer area. Based on this, users can freely set up geofences, allowing the users to set up buffer areas, and the buffer areas can be activated or deactivated based on the actual conditions set by the users. This allows the geofence setting and usage to better match usage scenarios for the users, thereby enhancing the user experience.

In addition, a further embodiment of the present disclosure provides a computer-readable storage medium which stores a computer-executable program, which is executed by at least one control processor, for example, by one processor in FIG. 11, causing the at least one control processor to perform the geofence setting method in the above embodiment of the present disclosure, for example, to execute the above-described method steps S1001 to S1003 in FIG. 1, S2001 to S2002 in FIG. 2A, 201 to 209 in FIG. 2B, 301 to 309 in FIG. 3, and 401 to 411 in FIG. 4. The geofence setting method includes: determining an under guardian tracker that needs to be monitored by a guardian tracker; generating, by the guardian tracker, a geofence, and setting up a buffer area in a boundary area of the geofence; and configuring an activation condition or a deactivation condition for the geofence and the buffer area according to a usage scenario in which the geofence is applied, such that with the geofence and the buffer area being activated, the guardian tracker receives notification sent by the under guardian tracker in response to determining that the under guardian tracker has entered or left the buffer area. Based on this, users can freely set up geofences, allowing the users to set up buffer areas, and the buffer areas can be activated or deactivated based on the actual conditions set by the users. This allows the geofence setting and usage to better match usage scenarios for the users, thereby enhancing the user experience.

An embodiment of the present disclosure includes: determining a pairing relationship between a guardian tracker(s) and an under guardian tracker(s); determining an under guardian tracker that needs to be monitored by a guardian tracker; generating, by the guardian tracker, a geofence, and setting up a buffer area in a boundary area of the geofence; and configuring an activation condition or a deactivation condition for the geofence and the buffer area according to a usage scenario in which the geofence is applied, such that with the geofence and the buffer area being activated, the guardian tracker receives notification sent by the under guardian tracker in response to determining that the under guardian tracker has entered or left the buffer area. Based on this, users can freely set up geofences, allowing the users to set up buffer areas, and the buffer areas can be activated or deactivated based on the actual conditions set by the users. This allows the geofence setting and usage to better match usage scenarios for the users, thereby enhancing the user experience.

It can be understood by those of ordinary skill in the art that all or some of the steps of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those of ordinary skill in the art, the term computer-readable storage medium includes volatile and nonvolatile, removable and non-removable media implemented in any method or technique for storing information, such as computer-readable programs, data structures, program modules or other data. A computer-readable storage medium includes but is not limited to a random access memory (RAM), a read-only memory (ROM), an electrically erasable programmable read-only memory (EEPROM), a flash memory or other memory techniques, a compact disc read-only memory (CD-ROM), a digital versatile disk (DVD) or other optical disk storage, a magnetic cassette, a magnetic tape, magnetic disk storage or other magnetic storage devices, or any other medium that can be used to store desired information and can be accessed by a computer. Furthermore, it is well known to those of ordinary skill in the art that communication media typically contain computer-readable programs, data structures, program modules or other data in a modulated data signal such as a carrier wave or other transmission mechanism, and may include any information transmission media.

The above is a description of some embodiments of the present disclosure. However, the present disclosure is not limited to the above-mentioned embodiments.

## Claims

1. A geofence setting method, comprising:
determining an under monitor tracker that needs to be monitored by a monitor tracker (S1001);
generating, by the monitor tracker, a geofence, and setting up a buffer area in a boundary area of the geofence (S1002); and
configuring an activation condition or a deactivation condition for the geofence and the buffer area according to a usage scenario in which the geofence is applied, such that with the geofence and the buffer area being activated, the monitor tracker receives notification sent by the under monitor tracker in response to determining that the under monitor tracker has entered or left the buffer area (S1003);
**characterized in that**:
the configuring an activation condition or a deactivation condition for the buffer area according to a usage scenario in which the geofence is applied comprises:
configuring the activation condition or the deactivation condition for the buffer area according to at least one of an absolute location of the monitor tracker and the under monitor tracker in the usage scenario, or a relative location of the monitor tracker and the under monitor tracker in the usage scenario.

2. The method of claim 1, wherein at least one under monitor tracker needs to be monitored by at least one monitor tracker.

3. The method of claim 2, wherein the determining an under monitor tracker that needs to be monitored by a monitor tracker comprises:
setting up the monitor tracker and the under monitor tracker (S2001); and
pairing the monitor tracker and the under monitor tracker one by one through polling (S2002).

4. The method of claim 1, wherein the generating, by the monitor tracker, a geofence comprises any one of:
acquiring, at the monitor tracker, the geofence selected by a monitor; or
acquiring, at the monitor tracker, the geofence drawn by a monitor; or
generating the geofence from a movement trajectory of the monitor tracker.

5. The method of claim 1, wherein the configuring an activation condition or a deactivation condition for the buffer area according to a usage scenario in which the geofence is applied further comprises:
configuring the activation condition or the deactivation condition for the buffer area according to a time period of the usage scenario.

6. The method of claim 1, wherein the buffer area comprises a first buffer area and a second buffer area, and the setting up a buffer area in a boundary area of the geofence comprises:
setting up the first buffer area outside the geofence; and
setting up the second buffer area inside the geofence;
wherein the first buffer area and the second buffer area are smaller than the geofence.

7. The method of claim 6, wherein the monitor tracker receiving notification sent by the under monitor tracker in response to determining that the under monitor tracker has entered or left the buffer area comprises:
in response to determining that the under monitor tracker has entered the first buffer area or the second buffer area from inside the geofence, the monitor tracker receiving a first notification sent by the under monitor tracker through a cloud; or
in response to determining that the under monitor tracker has entered the first buffer area or the second buffer area from outside the geofence, the monitor tracker receiving a second notification sent by the under monitor tracker through the cloud; or
in response to determining that the under monitor tracker has entered the geofence from the first buffer area or the second buffer area, the monitor tracker receiving a third notification sent by the under monitor tracker through the cloud; or
in response to determining that the under monitor tracker has left the geofence from the first buffer area or the second buffer area, the monitor tracker receiving a fourth notification sent by the under monitor tracker through the cloud.

8. The method of any one of claims 1 to 7, further comprising:
switching a positioning mode for the under monitor tracker from periodic positioning to real-time positioning in response to determining that the under monitor tracker is in the buffer area.

9. An electronic device (1200), comprising: a memory (1220), a processor (1210), and a computer program stored in the memory (1220) and executable by the processor (1210), wherein the computer program, when executed by the processor (1210), causes the processor (1210) to implement the geofence setting method of any one of claims 1 to 8.

10. A computer-readable storage medium, storing a computer-executable program configured to cause a computer to execute the geofence setting method of any one of claims 1 to 8.

## Patentansprüche

1. Verfahren zur Einstellung eines elektronischen Zauns, umfassend:
Bestimmen eines zu überwachenden Trackers, der durch einen Überwachungs-Tracker überwacht werden muss (S1001);
Erzeugen, durch den Überwachungs-Tracker, eines elektronischen Zauns und Einrichten eines Pufferbereichs in einem Grenzbereich des elektronischen Zauns (S1002); und
Konfigurieren einer Aktivierungsbedingung oder einer Deaktivierungsbedingung für den elektronischen Zaun und den Pufferbereich entsprechend einem Anwendungsszenario, in dem der elektronische Zaun angewendet wird, sodass, wenn der elektronische Zaun und der Pufferbereich aktiviert sind, der Überwachungs-Tracker als Reaktion auf die Feststellung, dass der zu überwachende Tracker den Pufferbereich betreten oder verlassen hat, eine durch den zu überwachenden Tracker gesendete Benachrichtigung empfängt (S1003);
**dadurch gekennzeichnet, dass**:
das Konfigurieren einer Aktivierungsbedingung oder einer Deaktivierungsbedingung für den Pufferbereich entsprechend einem Anwendungsszenario, in dem der elektronische Zaun angewendet wird, umfasst:
Konfigurieren der Aktivierungsbedingung oder der Deaktivierungsbedingung für den Pufferbereich entsprechend mindestens einem von einer absoluten Position des Überwachungs-Trackers und des zu überwachenden Trackers im Anwendungsszenario oder einer relativen Position des Überwachungs-Trackers und des zu überwachenden Trackers im Anwendungsszenario.

2. Verfahren nach Anspruch 1, wobei mindestens ein zu überwachender Tracker durch mindestens einen Überwachungs-Tracker überwacht werden muss.

3. Verfahren nach Anspruch 2, wobei das Bestimmen eines zu überwachenden Trackers, der durch einen Überwachungs-Tracker überwacht werden muss, umfasst:
Einrichten des Überwachungs-Trackers und des zu überwachenden Trackers (S2001); und
Paaren des Überwachungs-Trackers und des zu überwachenden Trackers eins zu eins durch Polling (S2002).

4. Verfahren nach Anspruch 1, wobei das Erzeugen, durch den Überwachungs-Tracker, eines elektronischen Zauns eines der Folgenden umfasst:
Erfassen, am Überwachungs-Tracker, des von einem Überwachenden ausgewählten elektronischen Zauns; oder
Erfassen, am Überwachungs-Tracker, des von einem Überwachenden gezeichneten elektronischen Zauns; oder
Erzeugen des elektronischen Zauns aus einer Bewegungsbahn des Überwachungs-Trackers.

5. Verfahren nach Anspruch 1, wobei das Konfigurieren einer Aktivierungsbedingung oder einer Deaktivierungsbedingung für den Pufferbereich entsprechend einem Anwendungsszenario, in dem der elektronische Zaun angewendet wird, ferner umfasst:
Konfigurieren der Aktivierungsbedingung oder der Deaktivierungsbedingung für den Pufferbereich entsprechend einem Zeitraum des Anwendungsszenarios.

6. Verfahren nach Anspruch 1, wobei der Pufferbereich einen ersten Pufferbereich und einen zweiten Pufferbereich umfasst und das Einrichten eines Pufferbereichs in einem Grenzbereich des elektronischen Zauns umfasst:
Einrichten des ersten Pufferbereichs außerhalb des elektronischen Zauns; und
Einrichten des zweiten Pufferbereichs innerhalb des elektronischen Zauns,
wobei der erste Pufferbereich und der zweite Pufferbereich kleiner als der elektronische Zaun sind.

7. Verfahren nach Anspruch 6, wobei das Empfangen einer durch den zu überwachenden Tracker gesendeten Benachrichtigung durch den Überwachungs-Tracker als Reaktion auf die Feststellung, dass der zu überwachende Tracker den Pufferbereich betreten oder verlassen hat, umfasst:
als Reaktion auf die Feststellung, dass der zu überwachende Tracker den ersten Pufferbereich oder den zweiten Pufferbereich aus dem Inneren des elektronischen Zauns betreten hat, Empfangen einer ersten Benachrichtigung, die durch den zu überwachenden Tracker über eine Cloud gesendet wird, durch den Überwachungs-Tracker; oder
als Reaktion auf die Feststellung, dass der zu überwachende Tracker den ersten Pufferbereich oder den zweiten Pufferbereich von außerhalb des elektronischen Zauns betreten hat, Empfangen einer zweiten Benachrichtigung, die durch den zu überwachenden Tracker über die Cloud gesendet wird, durch den Überwachungs-Tracker; oder
als Reaktion auf die Feststellung, dass der zu überwachende Tracker den elektronischen Zaun aus dem ersten Pufferbereich oder dem zweiten Pufferbereich betreten hat, Empfangen einer dritten Benachrichtigung, die durch den zu überwachenden Tracker über die Cloud gesendet wird, durch den Überwachungs-Tracker; oder
als Reaktion auf die Feststellung, dass der zu überwachende Tracker den elektronischen Zaun aus dem ersten Pufferbereich oder dem zweiten Pufferbereich verlassen hat, Empfangen einer vierten Benachrichtigung, die durch den zu überwachenden Tracker über die Cloud gesendet wird, durch den Überwachungs-Tracker.

8. Verfahren nach einem der Ansprüche 1 bis 7, ferner umfassend:
Umschalten eines Positionierungsmodus für den zu überwachenden Tracker von periodischer Positionierung auf Echtzeitpositionierung als Reaktion auf die Feststellung, dass sich der zu überwachende Tracker im Pufferbereich befindet.

9. Elektronische Vorrichtung (1200), umfassend: einen Speicher (1220), einen Prozessor (1210) und ein Computerprogramm, das in dem Speicher (1220) gespeichert und durch den Prozessor (1210) ausführbar ist, wobei das Computerprogramm, wenn es durch den Prozessor (1210) ausgeführt wird, den Prozessor (1210) veranlasst, das Verfahren zur Einstellung eines elektronischen Zauns nach einem der Ansprüche 1 bis 8 auszuführen.

10. Computerlesbares Speichermedium, das ein computerausführbares Programm speichert, das dazu konfiguriert ist, einen Computer zur Ausführung des Verfahrens zur Einstellung eines elektronischen Zauns nach einem der Ansprüche 1 bis 8 zu veranlassen.

## Revendications

1. Procédé de réglage de clôture électronique, comprenant :
déterminer un traceur surveillé devant être surveillé par un traceur de surveillance (S1001) ;
générer, par le traceur de surveillance, une clôture électronique, et définir une zone tampon dans une zone limite de la clôture électronique (S1002) ; et
configurer une condition d'activation ou une condition de désactivation pour la clôture électronique et la zone tampon selon un scénario d'utilisation dans lequel la clôture électronique est appliquée, de sorte que lorsque la clôture électronique et la zone tampon sont activées, le traceur de surveillance reçoive une notification envoyée par le traceur surveillé en réponse à la détermination que le traceur surveillé est entré dans la zone tampon ou a quitté celle-ci (S1003) ;
**caractérisé en ce que** :
la configuration d'une condition d'activation ou d'une condition de désactivation pour la zone tampon selon un scénario d'utilisation dans lequel la clôture électronique est appliquée comprend :
configurer la condition d'activation ou la condition de désactivation pour la zone tampon selon au moins l'une d'une localisation absolue du traceur de surveillance et du traceur surveillé dans le scénario d'utilisation, ou d'une localisation relative du traceur de surveillance et du traceur surveillé dans le scénario d'utilisation.

2. Procédé selon la revendication 1, dans lequel au moins un traceur surveillé doit être surveillé par au moins un traceur de surveillance.

3. Procédé selon la revendication 2, dans lequel la détermination d'un traceur surveillé devant être surveillé par un traceur de surveillance comprend :
configurer le traceur de surveillance et le traceur surveillé (S2001) ; et
apparier le traceur de surveillance et le traceur surveillé un par un au moyen d'une interrogation (polling) (S2002).

4. Procédé selon la revendication 1, dans lequel la génération, par le traceur de surveillance, d'une clôture électronique comprend l'un quelconque des éléments suivants :
acquérir, au niveau du traceur de surveillance, la clôture électronique sélectionnée par un surveillant ; ou
acquérir, au niveau du traceur de surveillance, la clôture électronique dessinée par un surveillant ; ou
générer la clôture électronique à partir d'une trajectoire de déplacement du traceur de surveillance.

5. Procédé selon la revendication 1, dans lequel la configuration d'une condition d'activation ou d'une condition de désactivation pour la zone tampon selon un scénario d'utilisation dans lequel la clôture électronique est appliquée comprend en outre :
configurer la condition d'activation ou la condition de désactivation pour la zone tampon selon une période de temps du scénario d'utilisation.

6. Procédé selon la revendication 1, dans lequel la zone tampon comprend une première zone tampon et une seconde zone tampon, et la définition d'une zone tampon dans une zone limite de la clôture électronique comprend :
définir la première zone tampon à l'extérieur de la clôture électronique ; et
définir la seconde zone tampon à l'intérieur de la clôture électronique,
dans lequel la première zone tampon et la seconde zone tampon sont plus petites que la clôture électronique.

7. Procédé selon la revendication 6, dans lequel lorsque le traceur de surveillance reçoit une notification envoyée par le traceur surveillé en réponse à la détermination que le traceur surveillé est entré dans la zone tampon ou a quitté celle-ci, cela comprend :
en réponse à la détermination que le traceur surveillé est entré dans la première zone tampon ou dans la seconde zone tampon depuis l'intérieur de la clôture électronique, le traceur de surveillance recevant une première notification envoyée par le traceur surveillé via un nuage ; ou
en réponse à la détermination que le traceur surveillé est entré dans la première zone tampon ou dans la seconde zone tgampon depuis l'extérieur de la clôture électronique, le traceur de surveillance recevant une seconde notification envoyée par le traceur surveillé via le nuage ; ou
en réponse à la détermination que le traceur surveillé est entré dans la clôture électronique depuis la première zone tampon ou la seconde zone tampon, le traceur de surveillance recevant une troisième notification envoyée par le traceur surveillé via le nuage ; ou
en réponse à la détermination que le traceur surveillé a quitté la clôture électronique depuis la première zone tampon ou la seconde zone tampon, le traceur de surveillance recevant une quatrième notification envoyée par le traceur surveillé via le nuage.

8. Procédé selon l'une quelconque des revendications 1 à 7, comprenant :
commuter un mode de positionnement du traceur surveillé d'un positionnement périodique à un positionnement en temps réel en réponse à la détermination que le traceur surveillé se trouve dans la zone tampon.

9. Dispositif électronique (1200), comprenant : une mémoire (1220), un processeur (1210), et un programme informatique stocké dans la mémoire (1220) et exécutable par le processeur (1210), dans lequel le programme informatique, lorsqu'il est exécuté par le processeur (1210), amène le processeur (1210) à mettre en œuvre le procédé de réglage de clôture électronique selon l'une quelconque des revendications 1 à 8.

10. Support de stockage lisible par ordinateur, stockant un programme informatique exécutable par ordinateur configuré pour amener un ordinateur à exécuter le procédé de réglage de clôture électronique selon l'une quelconque des revendications 1 à 8.
